# EUROPÄISCHE PATENTANMELDUNG

(11) **EP 1 081 045 A2**
(43) Veröffentlichungstag der Anmeldung: **07.03.2001**
(21) Anmeldenummer: 00117507.4
(22) Anmeldetag: 14.08.2000
(51) Int. Cl.: B64F 1/28

(54) **Versorgungsanordnung**

(30) Priorität: 30.08.1999 DE 19941434
(71) Anmelder: Fladung, Manfred, 63776 Mömbris (DE)
(72) Erfinder: Fladung, Manfred, 63776 Mömbris (DE)
(74) Vertreter: Stoffregen, Hans-Herbert, Dr. Dipl.-Phys.

(57) **Zusammenfassung**

Die Erfindung bezieht sich auf eine Versorgungsanordnung umfassend eine in einer Bodenfläche (10) wie z. B. auf einem Rollfeld eingelassene Aufnahme (12) mit einer über eine Abdeckung (36) verschließbare Öffnung, wobei in der Aufnahme zumindest eine Einrichtung (28) angeordnet ist, von der ihrerseits insbesondere zumindest eine Versorgungsleitung ausgeht. Damit die Versorgungsanordnung bei konstruktiv einfachem Aufbau eine hohe Stabilität bei geringem Gewicht aufweist, wobei eine Vorfertigung zusammen mit den notwendigen Einrichtungen erfolgen und eine so hergestellte Einheit problemlos zum Aufstellungsort transportiert werden kann, ist vorgesehen, dass die Aufnahme ein Hohlkugelkörper (12) ist.

## Beschreibung

Die Erfindung bezieht sich auf eine Versorgungsanordnung umfassend eine in einer Bodenfläche wie z. B. auf einem Rollfeld eingelassene Aufnahme mit einer über eine Abdeckung verschließbaren Öffnung, wobei die Aufnahme zumindest eine Einrichtung umfasst, von der insbesondere zumindest eine Versorgungsleitung wie Strom- und/oder Luft- und/oder Wasserleitung bzw. ein Anschluss dieser ausgeht.

Eine entsprechende Anordnung ist der DE 37 43 393 C2 zu entnehmen. Die als ein eine quaderförmige Geometrie aufweisender Schacht ausgebildete Aufnahme weist als Einrichtung ein Säulenelement auf, das anheb- und absenkbar ist und Versorgungsanschlüsse für z. B. elektrische Energie und/oder Druckluft und/oder Wasser umfasst. Von dem Säulenelement selbst geht ein Deckelelement aus, welches die Abdeckung durchsetzt. Beim Erfassen des Deckelelementes kann mit geringer Kraft das Säulenelement angehoben werden, um die Versorgungsanschlüsse zu nutzen, bzw. abgesenkt werden, um die Abdeckung bündig zu verschließen. Dabei kann das Säulenelement mit Gegengewichten verbunden sein. Auch können Gasdruckfedern benutzt werden.

Die Schächte selbst sind aus Beton gegossen und weisen nach dem Stand der Technik z. B. Gewichte von 12 Tonnen auf, so dass sowohl Herstellung als auch Transport mit erheblichem Aufwand verbunden sind.

Schächte quaderförmiger oder zylinderischer Geometrie sind z. B. der DE-C 686 834, DE 89 00 046 U1, DE 94 01 022 U1, GB-C 674,118, GB-C 673,998 US-A 2,434,824 oder US 5,535,908 zu entnehmen. Dabei können die Schächte auch aus Metall oder Fiberglas bestehen bzw. durch einen verlorenen Körper gebildet werden.

Der vorliegenden Erfindung liegt das Problem zu Grunde, eine Versorgungsanordnung der eingangs genannten Art so weiterzubilden, dass diese bei konstruktiv einfachem Aufbau eine hohe Stabilität bei geringem Gewicht aufweist, wobei eine Vorfertigung zusammen mit den notwendigen Einrichtungen erfolgen und eine so hergestellte Einheit problemlos zum Aufstellungsort transportiert werden kann. Auch soll die Versorgungsanordnung derart sicherbar sein, dass bei geöffneter Abdeckung eine Gefahr für Bedienpersonen ausgeschlossen ist.

Erfindungsgemäß wird das Problem im Wesentlichen dadurch gelöst, dass die Aufnahme ein Hohlkugelkörper ist. Dabei geht von dem Hohlkugelkörper ein zylindrischer sich zur Bodenfläche wie Rollfeld sich erstreckender Ansatz wie Hals aus, der die mit der Abdeckung verschließbare Öffnung aufweist.

Insbesondere ist vorgesehen, dass der Hohlkugelkörper mit einem einen Auftrieb unterbindenden Element wie Platte verbunden ist, welches eine Betonplatte (Fundament/Betonplatte) sein kann. Somit kann der Hohlkugelkörper überaus leicht ausgebildet werden, ohne dass die Gefahr besteht, dass dieser nach der Installation in einem Boden auftreiben kann. Betonplatte und Hohlkugelkörper können fabrikseitig hergestellt werden, um sodann als Einheit z. B. in einem Container zum Installationsort transportiert zu werden. Im Vergleich zu bekannten zylindrischen oder quaderförmigen Schächten ergibt sich sowohl eine erhebliche Transportkosteneinsparung als auch eine solche beim Einbringen ins Erdreich, da die notwendigen Maschinen leicht sein können.

In Weiterbildung der Erfindung ist vorgesehen, dass die Betonplatte (Fundament-Betonplatte) mit dem Hohlkugelkörper bodenseitig verbunden ist, wobei insbesondere von dem Hohlkugelkörper Verankerungselemente ausgehen, die in der Betonplatte vergießbar sind. Hierzu ist vorgesehen, dass der Hohlkugelkörper bodenseitig die Wandung durchsetzende Verankerungselemente wie auf einem Kreis angeordnete Schraub- oder Bolzenelemente aufweist. Der Hohlkugelkörper wird mit seinem Bodenbereich in einer Verschalung positioniert wird, die sodann mit Beton ausgegossen wird. Hierdurch ergibt sich eine Einheit aus Betonplatte und Hohlkugelkörper, die transportierbar ist. Gegebenenfalls kann auch ein erneutes Lösen des Hohlkugelkörpers von der Betonplatte erfolgen.

Der Hohlkugelkörper selbst besteht insbesondere aus Kunststoffmaterial, vorzugsweise Thermoplastmaterial, insbesondere Polyestermaterial. Der hohlzylinderische Ansatz oder Hals weist einen Querschnitt auf, der es ermöglicht, dass die die Versorgungsleitung bzw. den Anschluss dieser aufweisende Einrichtung durch die Öffnung hindurch anhebbar bzw. absenkbar ist. Dabei ist die Einrichtung selbst mit der Abdeckung bzw. einem diese durchsetzenden Deckelelement verbunden. Dabei kann eine Konstruktion gewählt werden, die Gegenstand der DE 37 43 393 C2 ist.

Insbesondere ist jedoch vorgesehen, dass die Abdeckung ein Deckelelement umfasst oder als solches ausgebildet ist, das von einer um eine parallel oder in etwa parallel zur Bodenfläche verlaufende Achse schwenkbaren Halterung ausgeht, von der seinerseits ein die Schwenkbewegung der Abdeckung beieinflussendes Gegengewicht ausgeht, und dass die Öffnung bei sich in Offenstellung befindlichem Deckelelement entweder durch ein von der Halterung ausgehendes Abdeckelement weitgehend verschlossen ist oder die Öffnung von einem zumindest eine ringförmige oder spiralförmige Einlage aufweisenden Schlauch verschließbar ist, mit dem z. B. konditionierte Luft einem Flugzeug zuführbar ist.

Durch die entsprechenden Maßnahmen ist sichergestellt, dass bei zur Öffnung beabstandetem Deckelelement ersteres nicht in einem Umfang frei zugänglich ist, dass eine Bedienperson unbeabsichtigt in die Aufnahme fallen kann. Des Weiteren ist das Abdeckelement selbst im Bereich der Öffnung verrastbar, so dass ein unkontrolliertes Verschwenken des Deckelelementes, das mit dem Abdeckelement eine Einheit bildet, nicht erfolgen kann.

Die Halterung, von der sowohl das Deckelelement als auch das Abdeckelement ausgehen, umfasst zumindest ein, insbesondere zwei, im Längsrandbereich des Deckelelementes verlaufendes und von der Achse durchsetztes Hebelelement, dessen einer Schenkel mit dem Deckelelement und dessen anderer Schenkel mit dem Gegengewicht verbunden ist, das zu der Halterung selbst verschwenkbar ist.

Um auch bei durch das Deckelelement verschlossener Öffnung Versorgungsleitungen aus der Aufnahme herausziehen zu können, ist vorgesehen, dass im achsseitigen Bereich Abdeckelement und Deckelelement zueinander beabstandet verlaufen, wobei insbesondere im achsseitigen Bereich zwischen Deckelelement und Abdeckelement ein rechteckförmiger Freiraum zum Hindurchführen von zumindest einer Versorgungsleitung vorgesehen ist. Ergänzend kann das Abdeckelement in seinem achsfernen Stirnbereich zumindest eine von z. B. einem Gummielement abgedeckte Öffnung aufweisen, durch die eine weitere Versorgungsleitung auch dann hindurchführbar ist, wenn das Abdeckelement im Bereich der Öffnung verrastet ist.

Das Abdeckelement selbst ist über ein insbesondere über dessen freien Stirnrandbereich sich erstreckendes Hebel- oder Schiebeelement verrastbar und ist somit auch über dieses entarretierbar. Hierzu kann ein Fußhebel vorgesehen sein.

Sofern die Öffnung durch den die Einlage aufweisenden Schlauch verschließbar ist, sieht eine Weiterbildung der Erfindung vor, dass der Schlauch in einer rohrförmigen und senkrecht oder im Wesentlichen senkrecht zur Bodenfläche verlaufenden Schlauchaufnahme innerhalb des Schachtes bzw. des Hohlkugelkörpers verläuft, wobei der Schlauch eine Länge derart aufweist, dass bei in der Schlauchaufnahme abgelegtem Schlauch sich dieser mit den aufeinanderliegenden Einlagen bzw. mit einem endseitig befestigten zylindrischen Anschluss bis hin zur Öffnung oder nahezu bis zur Öffnung erstreckt. Ferner kann der Schlauch bzw. sein zylindrischer Anschluss mittels eines Deckelelementes verschlossen sein, das über ein Verbindungselement mit dem Deckelelement verbunden ist. Somit wird der Schlauch beim Öffnen des Deckelelementes automatisch angehoben und kann von einer Bedienperson erfasst werden. Hierzu ist das Deckelelement mit dem Schlauch bzw. dem zylindrischen Ansatz über z. B. einen Bajonettverschluss oder einen Schraubverschluss verbunden.

Sofern die Öffnung von einem Schlauch durchsetzt wird, sollte diese zumindest bereichsweise von von einer zweiten Halterung ausgehenden Gleitelementen begrenzt sein, die beim Verschwenken des Deckelelementes von der mit dieser eine Einheit bildenden ersten Halterung anhebbar ist.

Damit das Deckelelement mittels des Gegengewichtes nach der Entarretierung schwerkraftbedingt in seine Offenstellung bzw. nach Verschwenken aus seiner Offenstellung bis nahezu in seine Schließstellung verschwenken kann, wobei zur Vermeidung eines Klemmens ein Abstand zwischen dem Deckelelement und der Öffnung bleibt, sieht eine Weiterbildung der Erfindung vor, dass das Gegengewicht um eine von der Halterung ausgehende zweite Achse schwenkbar ist, wobei die erste und die zweite Achse in oder in etwa einer Ebene verlaufen, in der ihrerseits die Halterung mit dem Deckelelement verbunden ist. Dabei wird nach dem Entriegeln des Deckelelementes dieses durch das Gegengewicht bedingt in seine Offenstellung verschwenkt, in der die Ebene einen Winkel α mit α ≥ 90° gegenüber einer von der Öffnung aufgespannte Ebene beschreibt, wobei beim Verschwenken der Abdeckung derart, dass die Ebenen einen Winkel α mit α ≤ 90° einschließen, das Deckelelement durch das Gegengewicht bedingt im Bereich ihrer Schließstellung, jedoch beabstandet zu der Öffnung verschwenkbar ist. Sodann muss durch zusätzliche Krafteinleitung von einer Bedienperson die Abdeckung in der Öffnung verriegelt werden. Hierzu kann ein Drehverschluss vorgesehen sein.

Der die Halterung bildende Hebel, der mit dem Deckelelement und dem Gegengewicht eine Einheit bildet, besteht aus einem mit dem Deckelelement verbundenen ersten Schenkel U-förmiger Geometrie und einem mit dem Gegengewicht verbundenen zweiten Schenkel im Wesentlichen geradlinig verlaufender Geometrie, wobei die den Hebel durchsetzende erste Achse in einer parallel zur Bodenfläche sich erstreckenden Ebene und außerhalb der Öffnung selbst verläuft, wobei der erste U-förmige Schenkel den achsseitigen Randbereich der Aufnahme bei geöffneter Abdeckung umfasst.

Des Weiteren ist vorgesehen, dass die Bodenfläche zumindest im Bereich des Hohlkugelkörpers als Betonschicht ausgebildet ist, die den Ansatz bzw. Hals des Hohlkugelkörpers umgibt bzw. in der dieser vergossen ist. Hierzu weist der Ansatz bzw. Hals einen bodenflächig verlaufenden zumindest bereichsweise umlaufenden flanschartigen Rand auf.

In Weiterbildung der Erfindung ist vorgesehen, dass der Hohlkörper zwischen der Bodenfläche und der bodenseitig verlaufenden Platte von Schottermaterial, insbesondere verdichtetem Schottermaterial umgeben ist. Da der Hohlkugelkörper auf der Betonplatte aufsteht und kopfseitig mit seinem Ansatz von der als Betonschicht ausgebildeten Bodenfläche aufgenommen ist, erfolgt eine minimale statische Belastung des Hohlkugelkörpers. Auch hierdurch bedingt kann dieser relativ dünnwandig ausgebildet sein. So kann bei der Verwendung von Polyestermaterial eine Wandstärke gewählt werden, die im Mittenbereich in etwa bis 10 mm, vorzugsweise im Bereich von 8 mm bei einem Gesamtdurchmesser des Hohlkugelkörpers zwischen 50 und 300 cm, insbesondere in etwa 200 cm beträgt. Der Ansatz, d. h. Hohlkörperhals kann z. B. eine lichte Weite zwischen 600 mm und 700 mm aufweisen.

Aus statischen Gründen sollte des Weiteren der Hohlkugelkörper im Bodenbereich eine größere Wandstärke als im Mittenbereich aufweisen.

Beabstandet zum Tiefstpunkt des Hohlkugelkörpers ist ein Rost vorgesehen, um den Innenraum begehen zu können. Vom Tiefstpunkt geht des Weiteren ein Abwasserrohr aus, um angesammeltes Abwasser abzuführen. Gegebenenfalls kann eine Förderpumpe vorgesehen sein.

Im Seitenbereich des Hohlkugelkörpers münden Anschlussrohe, über die die zumindest eine Versorgungsleitung geführt wird. Vorzugsweise münden mehrere entsprechende Rohre, in dem Kugelkörper über die Versorgungsleitung wie Versorgungskabel, Wasserleitungen oder Leitungen konditionierte Luft geführt werden. Die Leitungen sind gegebenenfalls an Anschlusskästen befestigt, von denen Leitungsabschnitte zu den anheb- bzw. absenkbaren Einrichtung verlaufen. Anstelle von Anschlusskäasten können z. B. auch Kupplungen benutzt werden.

Sofern mehrere Versorgungsleitungen zu der Einrichtung führen, ist vorgesehen, dass die entsprechenden Leitungen wie z. B. elektrische Kabel in getrennten Bereichen auf dem Rost ablegbar sind. Hierzu kann eine entsprechende Trennwand vorgesehen sein. Zusätzliche Aufwickelvorrichtungen sind nicht erforderlich. Vielmehr werden die Kabel beim Absenken der Einrichtung unkontrolliert auf dem Rost abgelegt.

Von der den Auftrieb verhindernden Betonplatte selbst können Verankerungen wie Stangen oder Hülsen ausgehen, um die Einheit Hohlkugelkörper - Betonplatte problemlos erfassen und somit transportieren zu können.

Die erfindungsgemäße Lehre ist auch für z. B. Muffen enthaltende Elektroschächte oder sonstige in einem Erdreich einbringbare Einrichtungen anwendbar. Dabei wird die Dimensionierung des Hohlkugelkörpers auf den Einsatzzweck ausgelegt. Ein Einlassen der Kugel in eine Straße, einen Weg, einen Marktplatz oder im freien Gelände ist gleichfalls denkbar. Auch ist es nicht zwingend erforderlich, dass die Einrichtung bzw. Halterung für Kabel etc. ausfahrbar ist.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmenden bevorzugten Ausführungsbeispielen.

Es zeigen:
- Fig. 1: eine erste Ausführungsform einer Versorgungsanordnung,
- Fig. 2: die Versorgungsanordnung nach Fig. 1 um 90° gedreht,
- Fig. 3: eine zweite Ausführungsform einer Versorgungsanordnung,
- Fig. 4: eine dritte Ausführungsform einer Versorgungsanordnung,
- Fig. 5: einen Ausschnitt einer Versorgungsanordnung mit diese verschließenden Abdeckung,
- Fig. 6: die Abdeckung gemäß Fig. 5 in geöffneter Position und
- Fig. 7: Details einer weiteren Ausführungsform einer Versorgungsanordnung.

In den Fig. wird nachstehend die erfindungsgemäße Lehre erläutert, und zwar anhand einer in einem Rollfeld anzuordnenden Versorgungsanordnung. Hierdurch soll jedoch die erfindungsgemäße Lehre nicht eingeschränkt werden. Vielmehr ist die Versorgungsanordnung in jedem gewünschten Bereich positionierbar, in dem Versorgungsanschlüsse gewünscht werden. Dies gilt nicht nur im Bereich der Industrie, sondern z. B. auch auf Campingplätzen, Marktplätzen etc. .

Um z. B. ein auf einer Fläche 10 abgestelltes Fahrzeug wie Flugzeug, das sich in Parkposition befindet, mit 200 V/400 Hz und/oder 400 V/50 Hz Spannung und/oder Druckluft und/oder Wasser oder sonstigen Energien und/oder Medien zu versorgen, ist es bekannt, unterhalb der Fläche 10, also des Rollfelds bei einem Flugzeug, eine Versorgungsanordnung einzulassen, über die die erforderlichen Leitungen bzw. Kabel bzw. Anschlüsse zur Verfügung gestellt werden. Insoweit wird prinzipiell auf die Erläuterungen in der EP 0 664 254 B1 oder DE 37 43 393 C2 verwiesen.

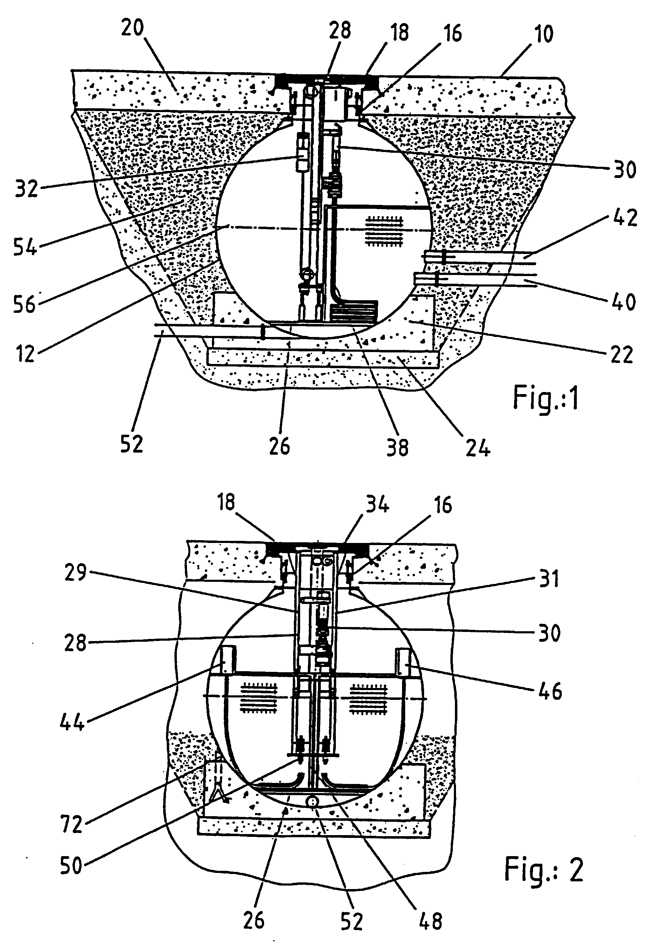

Erfindungsgemäß wird entsprechend der Fig. 1 bis 4 eine Unterflur-Versorgungsanordnung vorgeschlagen, die einen aus Kunststoffmaterial, insbesondere Polyestermaterial bestehende Hohlkugel 12 umfasst, innerhalb der Einrichtungen 14 angeordnet sind, über die die erforderlichen Versorgungsleitungen bzw. Anschlüsse zur Verfügung gestellt werden. Die Hohlkugel 12, die einen Durchmesser von z. B. 200 cm aufweisen kann, weist im Kopfbereich einen hohlzylinderischen Ansatz oder Hals 16 mit einem Durchmesser z. B. zwischen 60 und 70 cm auf, der von einer Abdeckung 18 verschließbar ist, die oberseitig bündig zur Oberfläche 10 verläuft. Der Hals oder Ansatz 16 ist dabei in einer die Fläche 10 bildende Betonschicht 20 eingelassen wie -gegossen.

Die Hohlkugel 12 ist des Weiteren bodenseitig mit einer Betonplatte 22 verbunden, die sicherstellt, dass die Hohlkugel 12 nicht aufgetrieben werden kann. Im Ausführungsbeispiel der Fig. 1 und 2 ist sodann die Betonplatte 12 auf einer Sauberkeitsschicht 24 positioniert.

Beabstandet zum tiefsten Punkt des Kugelkörpers 12 verläuft ein Standrost 26, so dass der Innenraum der Hohlkugel 12 begehbar ist.

In der Kugel 12 ist eine nicht näher bezeichnete Führung bzw. ein Rahmen vorhanden, entlang der eine Halterung 28 verschiebbar ist, um von der Halterung 28 ausgehende Anschlüsse wie Panelstecker 30 derart verfahren zu können, dass diese oberhalb der Oberfläche 10 zum Verbinden mit z. B. einem Flugzeug positionierbar sind oder sich innerhalb der Hohlkugel 12 befinden.

Die Halterung 28, die im Ausführungsbeispiel der Fig. 1 und 2 zwei vertikal verlaufende Säulen 29, 31 umfasst, wobei beim Anheben bzw. Absenken ein Gewichtsausgleich über Gegengewichte 32 erfolgt, die sicherstellen, dass die Halterung 38 mit geringer Kraft angehoben bzw. abgesenkt werden kann, ist mit einem Deckel 34 verbunden, bildet also mit diesem eine Einheit, der außenseitig fluchtend zu der Abdeckung 18 des Halses 16 gegebenenfalls bei abgesenkter Halterung 28 verläuft. Selbstverständlich können Deckel 34 und Abdeckung 18 eine Einheit bilden.

Im Ausführungsbeispiel wird über die Versorgungsanordnung ein Anschlusskabel 38 zur Verfügung gestellt, welches über den Panelstecker 30 mit einem Flugzeug verbunden werden kann. Über ein Kabelrohr 40, 42 wird eine entsprechende Versorgungsleitung in die Hohlkugel 12 eingeführt und zunächst mit Anschlusskästen 44, 46 verbunden, von denen das Kabel 38 gewünschter Länge zu dem Panelstecker 30 führt. In Abhängigkeit von der Stellung der Halterung 30 und damit des Panelsteckers 30 wird das Kabel 38 in mehr oder weniger großem Umfang auf das Rost 26 abgelegt.

Von der Halterung 28 kann auch mehr als nur ein Anschlusskabel ausgehen. Um ein Verwickeln der abgelegten Kabelabschnitte zu unterbinden, werden diese in voneinander getrennten Bereichen auf das Rost 26 abgelegt. Zum Abtrennen der Bereiche ist eine Trennwand 48 vorgesehen.

Die Halterung 28, die im Ausführungsbeispiel erwähntermaßen aus zwei parallel zueinander und untereinander verbundenen Säulen 29, 31 besteht, kann bodenseitig Dämpfungsfedern 50 aufweisen. Insoweit wird jedoch auf hinlänglich bekannte Konstruktionen verwiesen.

Vom Tiefstpunkt der Hohlkugel 12 geht des Weiteren ein Abwasserrohr 52 aus, welches eine Rückschlagklappe enthalten kann. Über das Abwasserrohr 52 kann in der Hohlkugel 12 angesammeltes Wasser abfließen bzw. abgesaugt werden.

Der Deckel 34 weist außenseitig einen Griff auf, um diesen leicht zu erfassen und somit zusammen mit der Halterung 28 im gewünschten Umfang anheben zu können, um die Panelstecker 30 erfassen zu können.

Die Hohlkugel 12 ist von verdichtetem Schottermaterial 54 umgeben. Hohe statische Belastungen wirken auf die Hohlkugel 12 nicht, denn auf die Fläche 10 einwirkende Lasten werden über die Betonschicht 20 abgeleitet.

Die Hohlkugel 12 kann erwähntermaßen aus Polyestermaterial bestehen und weist im Mittenbereich, also im Bereich der Linie 56 eine Stärke von z. B. 8 mm auf. Im Bodenbereich ist die Wand stärker ausgebildet und kann z. B. 20 mm betragen. Das Gewicht der Hohlkugel 12 beträgt mit einem Durchmesser von 200 cm ca. 300 kg, sofern die Hohlkugel 12 aus Polyester besteht.

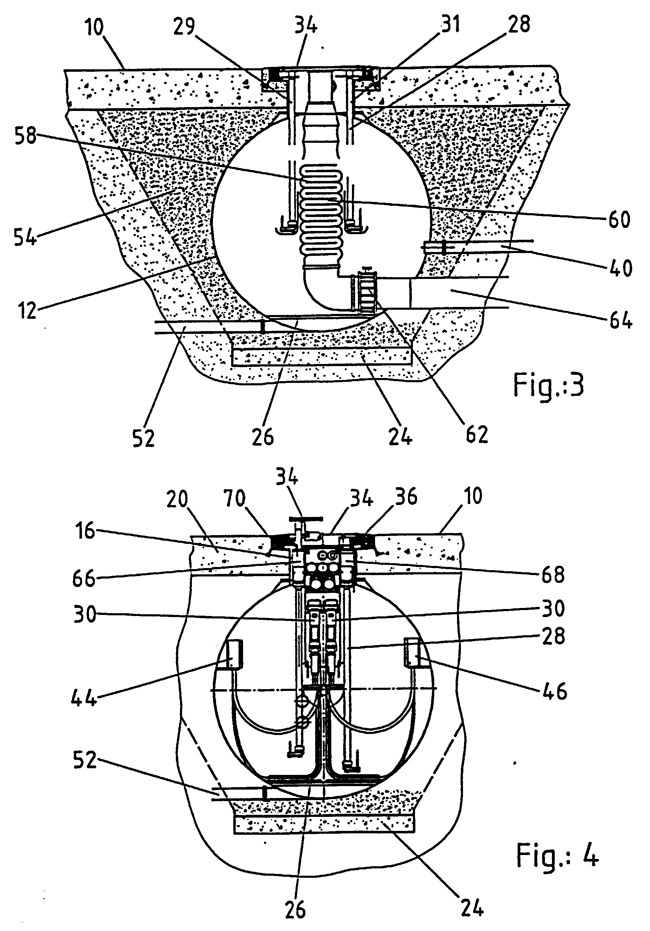

Ist im Ausführungsbeispiel der Fig. 1 und 2 die erfindungsgemäße Unterflur-Versorgungsanordnung zum Zurverfügungstellen von Strom ausgelegt, so kann eine entsprechende Konstruktion auch benutzt werden, um ein Fahrzeug wie Flugzeug mit konditionierter Luft zu versorgen. Dies soll anhand der Fig. 3 verdeutlicht werden, wobei für gleiche Elemente gleiche Bezugszeichen verwendet werden.

Abweichend von der Konstruktion der Fig. 1 ist jedoch die Hohlkugel 12 in der dargestellten Zeichnungen nicht über eine Betonplatte 22 gegen Auftrieb gesichert. Dies sollte jedoch bevorzugterweise erfolgen. Man erkennt die aus zwei Säulen 29, 31 bestehende Halterung 28, die mit dem Deckel 34 verbunden sind, um in zuvor beschriebener Weise ein in der Hohlkugel 12 vorhandenen und konditionierte Luft führenden Schlauch 58 bzw. einen Anschluss dieses erfassen zu können. Der Schlauch 58 ist zickzackförmig zusammenlegbar (Abschnitt 60) dann, wenn der Deckel 34 fluchtend zur Oberfläche 10 verläuft, also die Versorgungsanordnung verschlossen ist. Der Schlauch 58 selbst kann über eine Kupplung 62 mit einem im Bodenbereich der Hohlkugel 12 mündenden Anschlussrohr 64 verbunden werden.

Anhand des Ausführungsbeispiels der Fig. 4 soll noch einmal verdeutlicht werden, dass die Halterung 28 mit ihren Säulen 29, 31 oder gleichwirkenden Konstruktionselementen in Führungen 66, 68 verläuft, die im Ansatz 16 befestigt sind. Der linke Teil der Darstellung der Fig. 4 deutet eine angehobene Stellung der Halterung 28 an, in der die Halterung zusammen mit Deckel 34 über der Oberfläche 10 der Betonschicht 20 vorsteht. Der rechte Teil gibt die eingefahrene Position wieder, bei der der Deckel 34 fluchtend zur Oberfläche 10 ausgerichtet wird. Auch kann man erkennen, dass der Deckel 34 eine Öffnung in der Abdeckung 36 verschließt, die einen zumindest bereichsweise umlaufenden Flanschrand 70 aufweist, der in der Betonschicht 20 vergossen ist, so dass eine hinreichende Verankerung gewährleistet wird.

Die Öffnung selbst sollte 600-700 mm im Durchmesser betragen.

Um die Hohlkugel 12 mit der Betonplatte 22 zu verbinden, ist vorgesehen, dass auf einem horizontal verlaufenden Ring Verankerungselemente die Wandung der Hohlkugel 12 durchsetzen. Die entsprechende Verankerungselemente wie Bolzen oder Schraube weisen innenseitig einen Kopf auf, zwischen dem und der Innenwandung der Hohlkugel 12 ein Scheibenelement verläuft, um eine Kraftverteilung sicherzustellen. Eine entsprechende mit den Verankerungselementen wie Bolzen bestückte Hohlkugel wird sodann mit ihrem Bodenbereich in einer Schalung positioniert, die mit Beton ausgegossen wird. Nach dem Abbinden des Betons ist über die Verankerungselemente eine Verbindung zwischen der Hohlkugel 12 und der Betonplatte 22 gegeben. In der Betonplatte 22 können des Weiteren Verankerungselemente wie Haken oder Ösen 72 eingelassen sein, um die Einheit Betonplatte 22 Hohlkugel 12 problemlos z. B. in einem Container transportieren zu können. Somit kann ein Zusammenbau einschließlich der Halterung 28 und der zu dieser führenden Versorgungsleitungsabschnitte in einer Produktionsstätte erfolgen, um sodann eine Endmontage vor Ort durchzuführen. Hierzu ist nur erforderlich, dass die Hohlkugel 12 mit der Betonplatte 22 in eine entsprechende Grube eingesetzt werden und sodann die Verbindung mit den Versorgungsrohren 40, 42 einerseits und zwischen den durch die Rohre 40, 42 zugeführten Versorgungsleitungen mit den insbesondere explosionsgeschützten Anschlusskästen 44, 46 andererseits erfolgt. Sodann wird der Raum um die Hohlkugel 12 mit Schotter ausgefüllt und verdichtet, um anschließend die Betonschicht 20 zu gießen. Selbstverständlich kann die Betonschicht 20 auch aus Fertigbetonplatten bestehen, die eine dem Hals bzw. Ansatz 16 bzw. der Abdeckung 36 angepasste Aussparung aufweist, die anschließend im erforderlichen Umfang vergossen wird.

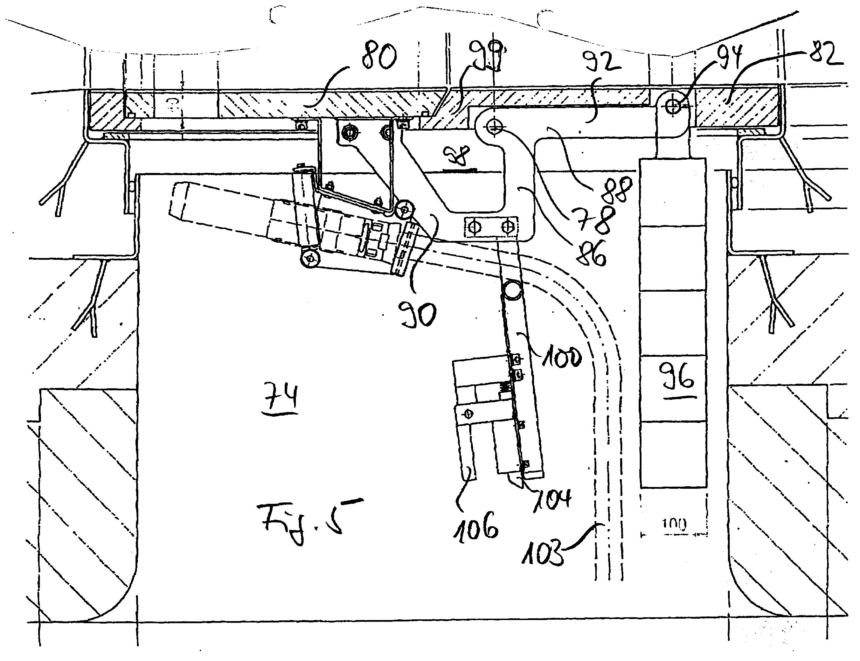

Den Fig. 5 bis 7 sind bevorzugte Ausführungsformen von Abdeckungen für Versorgungsanordnungen zuvor beschriebener Art zu entnehmen, wobei die Aufnahmen entweder der Ausführungsbeispiele der Fig. 3 bis 4 entsprechend als Hohlkugel oder in gewohnter Weise eine übliche Schachtform aufweisen können, also eine zylindrische oder quaderförmige Geometrie.

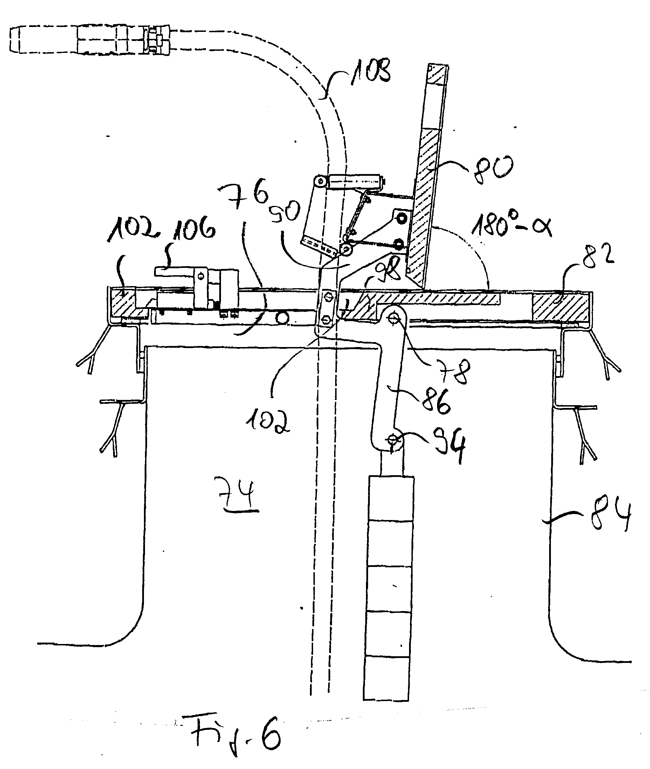

Wie die Fig. 5 und 6 verdeutlichen, ist eine Öffnung 76 einer allgemein mit den Bezugszeichen 74 versehenen Aufnahme über ein um eine parallel zur Oberfläche verlaufende erste Achse 78 verschwenkbares Deckelelement 80 verschließbar, das Teil einer Abdeckung 82 ist, die den Ansatz oder Hals 84 der Aufnahme 74 abdeckt. Das Deckelelement 80 geht von einer Halterung 86 aus, die von der ersten Achse 78 durchsetzt ist. Die Halterung 86 umfasst zwei im Längsrandbereich des Deckelelementes 80 verlaufende Hebelelemente 88, von denen ein erster Schenkel 90 eine U-förmige Geometrie aufweist und mit dem Deckelelement 80 verbunden ist. An einen zweiten Schenkel 92 langgestreckter Geometrie ist in einer zweiten Achse 94 ein Gegengewicht 96 angelenkt, das unabhängig von der Stellung des Deckelelementes 80 in der Aufnahme 74 bzw. dem halsförmigen Ansatz 84 verbleibt. Die U-förmige Geometrie des ersten Schenkels 90 ermöglicht es, dass die erste Achse 78 außerhalb der Öffnung 76 verläuft, so dass zwischen der Achse 78 und der Öffnung 76 verlaufender Randbereich 96 der Abdeckung 92 sich in dem von dem U-förmigen Schenkel 90 begrenzten Bereich 99 bei geöffnetem Deckelelement 80 erstrecken kann, wie dies durch die Fig. 6 verdeutlicht wird.

Ferner ist erkennbar, dass die Achsen 78, 94, um die einerseits die Halterung 86 und damit das Deckelelement 80 und andererseits das Gegengewicht 96 verschwenkbar sind, in oder in etwa einer Ebene verlaufen, in der auch das Deckelelement 80 mit dem U-förmigen Schenkel 90 und damit der Halterung 86 verbunden ist. Hierdurch bedingt ist einerseits ein schwerkraftbedingtes Öffnen des Deckelelementes 80, also ein Verschwenken um dessen Achse 78, und andererseits dann ein schwerkraftbedingtes Schließen des Deckelelementes 80 möglich, nämlich dann, wenn der Öffnungswinkel zwischen dem Deckelelement 80 und der von der Abdeckung 82 aufgespannten Ebene, die mit der in Fig. 1 bis 4 mit dem Bezugszeichen 10 gekennzeichneten Bodenfläche übereinstimmt, einen Winkel α beschreibt, der kleiner 90° ist. Dabei ist das Gegengewicht 94 auf das Gewicht des Deckelelementes derart ausgelegt, dass das Deckelelement 80 nicht vollständig schließt. Somit kann zwischen dem Deckelelement 80 und dem Rand der Öffnung 76 befindlicher Gegenstand nicht abgeschert werden. In geöffneter Stellung, in der das Deckelelement 80 eine stabile Position einnimmt, beläuft sich entsprechend des Ausführungsbeispiels der Fig. 5 und 6 der Winkel α auf mehr als 90°.

Um Sicherheitsbestimmungen zu genügen, muss bei geöffnetem Deckelelement 80 sichergestellt sein, dass die Öffnung 76 in einem Umfang abgedeckt ist, dass ein unbeabsichtigtes bzw. unkontrolliertes Hineinfallen von Gegenständen in die Aufnahme 74 bzw. ein Hineinfallen einer Person unterbleibt. Hierzu ist erfindungsgemäß vorgesehen, dass dem Deckelelement 80 ein Abdeckelement 100 zugeordnet ist, das von der Halterung 86 ausgeht und somit mit dem Deckelelement 80 eine starre Einheit bildet. Dabei endet das Deckelelement 80 beabstandet zum achsseitig verlaufenden Randbereich 99 der Abdeckung 82, so dass sich ein freier Spalt 102 ergibt, über den aus der Aufnahme bzw. dem Schacht 74 Versorgungsleitungen 103 herausgezogen bzw. eingebracht werden können.

Um ein unbeabsichtigtes Verschwenken des Deckelelementes 80 auszuschließen, ist das Abdeckelement 100 im stirnseitigen Randbereich 102 über eine Sperrklinke 104 arretierbar, die über einen Fußhebel 106 zurückziehbar ist, nämlich dann, wenn ein kontrolliertes Verrasten des Deckelelementes 80 in der Abdeckung 82 gewünscht wird.

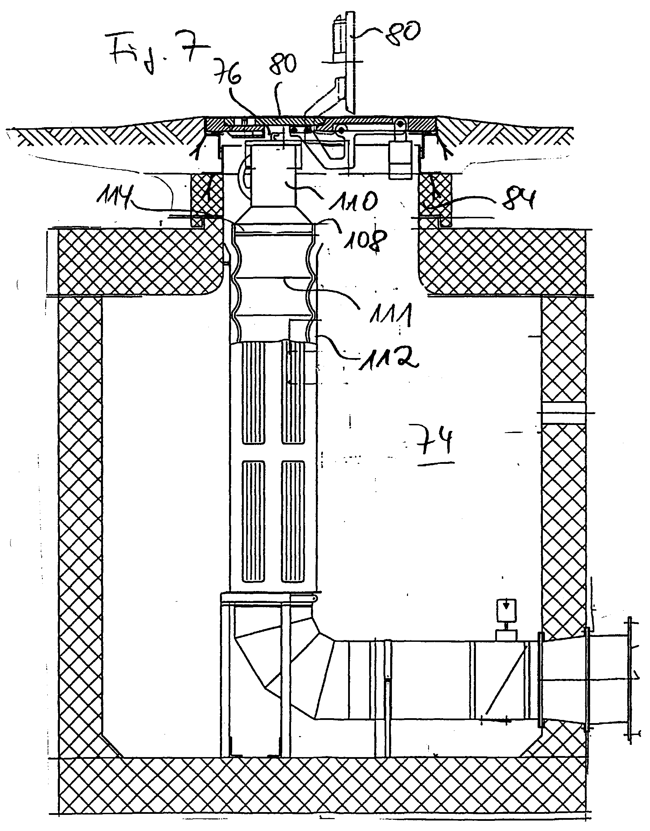

Bei dem Ausführungsbeispiel der Fig. 7 ist es nicht erfordelrich, dass dem Deckelelement 80 ein Abdeckelement 100 entsprechend der Fig. 5 und 6 zugeordnet wird; denn die Öffnung 76 selbst wird bei geöffnetem Deckelelement 80 von einem Versorgungsschlauch 108 bzw. ein von diesem ausgehenden zylindrischen Ansatz 110, der z. B. mit einem Flugzeug zum Versorgen dieses mit konditionierter Luft verbindbar ist, verschlossen. Hierzu weist der Schlauch 108 ringförmige bzw. spiralförmige Einlagen 111 auf. Diese sind so dimensioniert und auf die Länge des Schlauches 108 derart ausgelegt, dass bei in einer rohrförmigen Aufnahme 112 des abgelegten Schlauches 100 dieser mit seinem oberen Randbereich 114 bzw. seinem zylindrischen Ansatz 110 sich bis hin zur Öffnung 76 erstreckt. Somit ist diese über den Schlauch 108 verschlossen. Wird der Schlauch 108 aus dein Schacht 74 herausgezogen, so ist die Öffnung 76 selbst durch den herausgezogenen Schlauch 108 verschlossen.

Der Ansatz 110 selbst kann über einen tellerförmigen Verschluss 112 verschlossen sein, der über z. B. eine Kette mit dem Deckelelement 80 verbunden ist, so dass beim Öffnen, also Verschwenken des Deckelelementes 80 um die Achse 78 der Verschlusss 112 mit dem Schlauch 108 angehoben wird. Sodann ist es nur noch erforderlich, dass der Verschluss 112 von dem Schlauch 108 bzw. dem zylindrischen Ansatz 110 gelöst wird. Die Verbindung zwischen dem Verschluss 112 und dem zylindrischen Ansatz 110 kann durch eine Art Bajonettverschluss oder durch einen Schraubverschluss erfolgen.

Damit ein einfaches und schonendes Herausziehen bzw. Ablassen des Schlauches 108 über die Öffnung 76 möglich ist, sollte diese von Gleitelementen wie Rollen begrenzt sein, die sich zumindest entlang der Ränder erstrecken, entlang der die erste Achse 78 nicht verläuft. Die Gleitelemente können von einer rahmenförmigen zweiten Halterung ausgehen, die von der ersten Halterung 86 anhebbar und schwerkraftbedingt beim Schließen des Deckelelementes 80 absenkbar ist.

## Patentansprüche

1. Versorgungsanordnung umfassend eine in einer Bodenfläche (10) wie z. B. auf einem Rollfeld eingelassene Aufnahme (12, 74) mit einer über eine Abdeckung (36, 80) verschließbare Öffnung, wobei in der Aufnahme zumindest eine Einrichtung, insbesondere eine anheb- und absenkbare Einrichtung (28) angeordnet ist, von der ihrerseits insbesondere zumindest eine Versorgungsleitung wie Strom- und/oder Luft- und/oder Wasserleitung (38, 58, 103, 108) bzw. ein Anschluss (30) dieser ausgeht,
**dadurch gekennzeichnet,**
dass die Aufnahme ein Hohlkugelkörper (12) ist.

2. Versorgungsanordnung nach Anspruch 1,
**dadurch gekennzeichnet,**
dass der Hohlkugelkörper (12) mit einem einen Auftrieb unterbindenden Element wie Platte (22) oder Betonplatte verbunden ist, das insbesondere mit bodenseitigem Abschnitt des Hohlkugelkörpers (12) verbunden ist und/oder den Hohlkugelkörper bodenseitig umgibt bzw. um diesen umgossen ist, wobei gegebenenfalls von dem Hohlkugelkörper in der Platte vergossene Verankerungselemente ausgehen, die vorzugsweise als auf einem Kreisring angeordnete Schraub- oder Bolzenelemente ausgebildet sind.

3. Versorgungsanordnung nach Anspruch 1 oder 2,
**dadurch gekennzeichnet,**
dass der Hohlkugelkörper (12) einen sich zur Bodenfläche (10) hin erstreckenden Ansatz oder Hals (16) aufweist, der die mit der Abdeckung (36) verschließbare Öffnung aufweist, wobei der vorzugsweise eine Hohlzylinderform aufweisende Ansatz oder Hals des Hohlkugelkörpers einen Querschnitt derart aufweist, dass die die zumindest eine Versorgungsleitung (38, 50) bzw. den Anschluss (30) aufweisende Einrichtung (28) durch die Öffnung hindurch anhebbar ist.

4. Versorgungsanordnung nach zumindest einem der vorhergehenden Ansprüche,
**dadurch gekennzeichnet,**
dass die Bodenfläche (10) im Bereich des insbesondere aus Kunststoffmaterial, vorzugsweise Thermoplastmaterial, insbesondere Polyestermaterial bestehenden Hohlkugelkörpers (12) eine Betonschicht (20) ist, die den Ansatz bzw. Hals (16) des Hohlkugelkörpers umgibt, und dass insbesondere der Hohlkugelkörper zwischen der Bodenfläche und der bodenseitig verlaufenden Platte (22) von Schottermaterial, insbesondere verdichtetem Schottermaterial (54) umgeben ist.

5. Versorgungsanordnung nach zumindest einem der vorhergehenden Ansprüche,
**dadurch gekennzeichnet,**
dass der Hohlkugelkörper (12) vorzugsweise einen Durchmesser D mit 50 cm < D < 300 cm, insbesondere D in etwa 200 cm und/oder der zylindrische Ansatz wie Hals (16) vorzugsweise einen Durchmesser von 600 mm bis 700 mm aufweist, wobei insbesondere der Hohlkugelkörper (12) im Bodenbereich eine größere Wandstärke als im Mittenbereich (56) aufweist, wobei vorzugsweise die Wandstärke des Hohlkugelkörpers in seinem Mittenbereich in etwa 5 bis 15 mm, insbesondere in etwa 8 mm beträgt und/oder die Wandstärke des Hohlkugelkörpers in seinem Bodenbereich in etwa 15 bis 30 mm, insbesondere in etwa 20 mm beträgt.

6. Versorgungsanordnung nach zumindest einem der vorhergehenden Ansprüche,
**dadurch gekennzeichnet,**
dass vom Bodenbereich des Hohlkugelkörpers (12) ein Abwasserrohr (52) ausgeht, das insbesondere in der Betonplatte (22) eingegossen ist und/oder in dem eine Rückschlagklappe angeordnet ist.

7. Versorgungsanordnung nach zumindest einem der vorhergehenden Ansprüche,
**dadurch gekennzeichnet,**
dass in dem Hohlkugelkörper (12), insbesondere im Bereich seines Ansatzes (16) oder in diesem ortsfest zumindest eine Führung (66, 68) angeordnet ist, von der die die zumindest eine Versorgungsleitung bzw. ihren Anschluss aufweisende Einrichtung (28) längsverschiebbar ausgeht, wobei insbesondere die Einrichtung zwei parallel zueinander verlaufende Säulen (29, 31) umfasst, von der Halterungen für die zumindest eine Versorgungsleitung (38, 58) bzw. deren Anschluss (30) ausgeht, und/oder dass von der Einrichtung zumindest ein elektrisches Kabel (38) ausgeht, das im Bodenbereich des Hohlkugelkörpers (12), insbesondere auf einem in dessen Bodenbereich verlaufenden Rost (26) ablegbar ist und/oder dass von der Einrichtung (28) zwei Versorgungsleitungen wie Kabel ausgehen, die in über z. B. eine Wand abgetrennten Bereichen des Hohlkugelkörpers (12) bzw. des Rostes (26) ablegbar sind.

8. Versorgungsanordnung nach zumindest einem der vorhergehenden Ansprüche,
**dadurch gekennzeichnet,**
dass der Ansatz (16) bzw. dessen Abdeckung (38) zumindest bereichsweise einen flanschartigen Rand aufweist, der außenseitig fluchtend zur Oberfläche (10) verläuft, und/oder dass der Hohlkugelkörper (12) vorzugsweise in seinem Mittenbereich mit zumindest einem eine Versorgungsleitung führenden Rohr (40, 42) verbunden ist und/oder dass der Hohlkugelkörper (12) zumindest einen insbesondere explosionsgeschützten Anschlusskasten (44, 46) für eine Versorgungsleitung aufweist und/oder dass von der den Auftrieb unterbindenden Betonplatte (22) Haken oder Stangen (72) als Transportverankerungen ausgehen.

9. Versorgungsanordnung nach insbesondere Anspruch 1, wobei die Aufnahme vorzugsweise als Hohlkugelkörper, zylindrischer oder quaderförmiger Schacht ausgebildet ist,
**dadurch gekennzeichnet,**
dass die Abdeckung (82) ein Deckelelement (80) umfasst oder als solches ausgebildet ist, das von einer um eine parallel oder in etwa parallel zur Bodenfläche verlaufende erste Achse (78) schwenkbaren Halterung (86) ausgeht, von der seinerseits ein die Schwenkbewegung des Deckelelementes beeinflussendes Gegengewicht (96) ausgeht, und dass die Öffnung (76) bei sich in Offenstellung befindlichem Deckelelement entweder durch ein von der Halterung ausgehendes Abdeckelement (100) weitgehend verschlossen ist oder die Öffnung von einem zumindest eine ringförmige oder spiralförmige Einlage aufweisenden Schlauch (108) verschließbar ist.

10. Versorgungsanordnung nach zumindest einem der vorhergehenden Ansprüche,
**dadurch gekennzeichnet,**
dass das Abdeckelement (100) im Bereich der Öffnung (76) verrastbar ist.

11. Versorgungsanordnung nach zumindest einem der vorhergehenden Ansprüche,
**dadurch gekennzeichnet,**
dass die Halterung (86) zumindest ein von der ersten Achse (88) durchsetztes Hebelelement (88) aufweist, dessen einer erster Schenkel mit dem Deckelelement (80) und dessen anderer zweiter Schenkel (92) mit dem Gegengewicht (96) verbunden ist, wobei die Halterung insbesondere zwei Hebelelemente umfasst, von denen jeweils eines entlang des Längsseitenbereichs des Deckelelementes verläuft.

12. Versorgungsanordnung nach zumindest einem der vorhergehenden Ansprüche,
**dadurch gekennzeichnet,**
dass das Deckelelement (80) und das Abdeckelement (100) achsseitig zueinander beabstandet verlaufen, wobei im zwischen dem Abdeckelement und dem Deckelelement verlaufenden im Querschnitt insbesondere rechteckförmigen Freiraum zumindest eine Versorgungsleitung (103) hindurchführbar ist.

13. Versorgungsanordnung nach zumindest einem der vorhergehenden Ansprüche,
**dadurch gekennzeichnet,**
dass von der freien Außenfläche des Abdeckelementes (100) ein Hebel wie Fußhebel ausgeht, über das das mit dem Deckelelement (100) eine starre Einheit bildende Abdeckelement entriegelbar ist.

14. Versorgungsanordnung nach zumindest einem der vorhergehenden Ansprüche,
**dadurch gekennzeichnet,**
dass im achsfern liegenden Stirnrandbereich des Abdeckelementes (100) zumindest eine insbesondere über ein Gummielement abdeckbare Öffnung zum Hindurchführen einer Versorgungsleitung vorgesehen ist.

15. Versorgungsanordnung nach zumindest einem der vorhergehenden Ansprüche,
**dadurch gekennzeichnet,**
dass der die zumindest eine Einlage aufweisende Schlauch (105) in eine rohrförmigen und senkrecht oder nahezu senkrecht zur Bodenfläche verlaufendenen Schlauchaufnahme (112) einbringbar ist und dass der Schlauch mit seiner zumindest einen Einlage eine Länge derart aufweist, dass bei in der Schlauchaufnahme abgelegtem Schlauch dieser bzw. mit einem endseitig versehenen zylindrischen Ansatz (110) sich bis hin zur Öffnung (76) der Aufnahme (74) erstreckt.

16. Versorgungsanordnung nach zumindest einem der vorhergehenden Ansprüche,
**dadurch gekennzeichnet,**
dass der Schlauch (108) bzw. sein zylindrischer Ansatz (110) mittels eines Verschlusses (112) verschließbar ist, der über ein Verbindungselement wie Kette oder Seil mit dem Deckelelement (80) verbunden ist, wobei der Verschluss mit dem Schlauch bzw. dem zylindrischen Ansatz (110) lösbar über z. B. einen Bajonettverschluss oder eine Schraubverbindung verbunden ist.

17. Versorgungsanordnung nach zumindest einem der vorhergehenden Ansprüche,
**dadurch gekennzeichnet,**
dass die Öffnung (76) von von einer zweiten Halterung ausgehenden zumindest längsrandseitig und achsfernliegend stirnrandseitig verlaufenden Gleitelementen begrenzt ist, die beim Verschwenken des Deckelelementes (80) von der ersten Halterung (86) anhebbar ist.

18. Versorgungsanordnung nach zumindest einem der vorhergehenden Ansprüche,
**dadurch gekennzeichnet,**
dass das Gegengewicht (96) um eine von der Halterung (86) ausgehende zweite Achse (94) schwenkbar ist und dass die erste und die zweite Achse (78, 94) in oder in etwa einer Ebene verlaufen, mit der die Halterung (86) mit dem Deckelelement (80) verbunden ist.

19. Versorgungsanordnung nach zumindest einem der vorhergehenden Ansprüche,
**dadurch gekennzeichnet,**
dass nach dem Entriegeln des Deckelelementes (80) dieses in seine Offenstellung mittels des Gegengewichts (86) schwerkraftbedingt verschwenkt und dass beim Zurückbewegen des Deckelelementes in eine Ebene, die zur von der Öffnung (76) aufgespannten Ebene einen Winkel α mit α kleiner 90° beschreibt, das Deckelelement durch das Gegengewicht schwerkraftbedingt im Bereich seiner Schließstellung, jedoch beabstandet zum die Öffnung umgebenden Rand verschwenkbar ist.

20. Versorgungsanordnung nach zumindest einem der vorhergehenden Ansprüche,
**dadurch gekennzeichnet,**
dass der erste mit dem Deckelelement (80) verbundene Schenkel (90) des Hebels (88) der Halterung (86) eine U-förmige Geometrie und der mit dem Gegengewicht (96) verbundene zweite Schenkel (92) im Wesentlichen eine geradlinige Geometrie aufweisen, wobei bei in seine Offenstellung verschwenktem Deckelelement (80) der U-förmige erste Schenkel (90) den öffnungsseitigen Randbereich (99) zumindest bereichsweise umfasst.
